# EUROPEAN PATENT SPECIFICATION

(11) **EP 0 532 447 B1**
(45) Date of publication and mention of the grant of the patent: **03.12.1997**
(21) Application number: 92610066.0
(22) Date of filing: 04.09.1992
(51) Int. Cl.: A01G 9/24, A01G 9/14

(54) **Irrigation system**
Bewässerungssystem
Système d'irrigation

(30) Priority: 09.09.1991 DK 1581/91
(43) Date of publication of application: 17.03.1993
(73) Proprietor: Pedersen, Leif Liebmann, 5270 Odense N (DK)
(72) Inventor: Pedersen, Leif Liebmann, 5270 Odense N (DK)
(74) Representative: Lund, Preben

(56) References cited:
- WO-A-90/07871
- US-A- 4 045 909

## Description

### Background of the invention

The present invention relates to an irrigation plant of the type described in the preamble of claim 1.

Valves provided in this type of irrigation plants are used for the control of the introduction as well as the draining of irrigation water and/or nutrient fluid, which in the following will be referred to as irrigation liquid, in connection with cultivation tables on which are placed potted plants, cultivation blocks with plants and the like. At suitable intervals irrigation liquid is led to the table for irrigating the pots at the bottom, after which the liquid is drained for outlet or reuse. This type of irrigation is called ebb-and-flow-irrigation.

Hitherto known irrigation valves, cf. for example Danish patent no. 146,812, are arranged in such a manner that the introduction and the draining is carried out through the same pipe, as the valve comprises movable parts providing for the necessary change-over. One of the drawbacks hereby is that the movable parts of the valve may fail, especially because the drained liquid often contains impurities such as algae, plant parts, residues of growth medium, etc. Besides, such valves are complicated and comprise several individual parts.

It is moreover a great advantage if the irrigation liquid is aerated before it is led to the cultivation table, as this increases the growth and results in healthier and stronger plants. Ordinary air, oxygen or CO₂ may be used for the aeration depending on the product to be grown on the table. Means are known for the aeration of the irrigation liquid, but these means usually require application of air or gas under pressure and application of atomizer nozzles or the like. Hereby a complicated construction is achieved which requires regular maintenance, cleaning, adjustment, etc.

Prior art document US-A-4 045 909 discloses an irrigation system for feeding and draining liquid nutrient solution to a cultivating table. The system comprises a reservoir having an outlet in the bottom which is connected to a pump via a pipe. The pump is connected to a horizontally disposed dump valve which is situated over the reservoir. The dump valve comprises a housing in which a downwardly directed outlet is provided and discloses a centrally disposed nozzle having an orifice which is narrower than the inlet of the valve. The valve is connected to a supply pipe which leads on to the cultivating table.

The liquid in the reservoir is pressurized under the action of the pump and is pumped through the valve, whereby the liquid is aerated. When the pump is de-energized, a major portion of the solution from the the growing bed drains back through the supply pipe, through the aperture in the valve and back into the reservoir.

Document US-A-4 045 909 forms the preamble of claim 1.

It is a stated object of the irrigation system according to US-A-4 045 909 to obviate the breakdowns of those prior art systems which include electrically activated draining valves. Although the above system is deemed to achieve this object, it still leaves something to be desired in terms of reliable operation.

### Summary of the invention

It is a main object of the present invention to provide means for a more reliable irrigation plant which is also capable of irrigating a plurality of cultivating tables simultaneously from only one source of pressurized liquid and draining these in a more effective way.

This object has been achieved by the subject matter set forth in independent claim 1.

A further advantage of the invention as defined in claim 2 pertains to the provision of a filter being placed immediately above the vertically directed valve, the filter having outlets which direct the stream of liquid solution orthogonally to the valve. Thereby, a unitary fluid resistance can be established for all the individual cultivating tables, thus enabling more beds to be irrigated simultaneously, even when the distance from the individual tables to the liquid source may vary. Additionally, the high speed of the liquid leaving the nozzle loosens and rearranges sediment and impurities which may have got stuck in the filter.

By designing the irrigation plant according to the invention as presented and characterized in claim 3, the draining is accelerated due to the siphon effect in the outlet, without any significant draining taking place during the introduction of liquid.

By designing the irrigation plant according to the invention as presented in claim 4 or 5, the desired flow conditions in the valve and the desired aeration are achieved.

A particularly applicable embodiment of the invention is achieved by designing the plant as presented and characterized in claim 6.

According to the irrigation system as defined in claim 7, it is possible in a simple manner, by applying one single magnet valve, to ebb-and-flow-irrigate a number of cultivation tables. The cultivation tables in a large growth plant are placed in groups, where the irrigation of each group is operated by one magnet valve which is controlled by a timer, an irrigation computer or another electric or electronic control device. Thus, a very simple and reliable plant is provided which hereby becomes cheap and competitive.

By the plant according to the invention as defined in claim 8, it is ensured that the irrigation liquid is aerated and that the draining of the cultivation tables will be fast.

By the plant according to the invention as defined in claim 8, one or a number of cultivation tables in a group can be closed off without further action being necessary. In this manner a further possibility is provided of adjusting the plant without applying complicated technique.

### The drawing

An example of an embodiment of the valve according to the invention, and an example of an embodiment of the irrigation plant according to the invention, are shown in the drawing and explained in further detail in the following with reference to the drawing, in that
- fig. 1: shows a plane, axial section through an irrigation valve according to the invention, and
- fig. 2: shows sketchily a part of an irrigation plant according to the invention.

### Description of the examples

The valve 1 comprises a valve housing in the form of a pipe section 9 with an inlet 2 for liquid and an outlet 3, and with a lateral in the form of a pipe branch 4, in which an angular pipe section 8 is secured. The pipe section 8 forms an angle V, preferably > 10°, in a horizontal plane when the valve 1 is arranged vertically.

On the inside of the valve 1 is placed a nozzle 6 with a nozzle orifice 10 having an inclined, bevelled, annular edge 11. In addition, the valve has two chambers; a mixing chamber 5 above the nozzle and an, as an example, annular chamber 7 surrounding the nozzle, in that the annular chamber is open through the pipe branch 4 allowing the annular chamber to communicate with the pipe section 8. The two chambers 5, 7 are moreover openly connected to each other, and at the top the chamber 5 ends in the outlet 3.

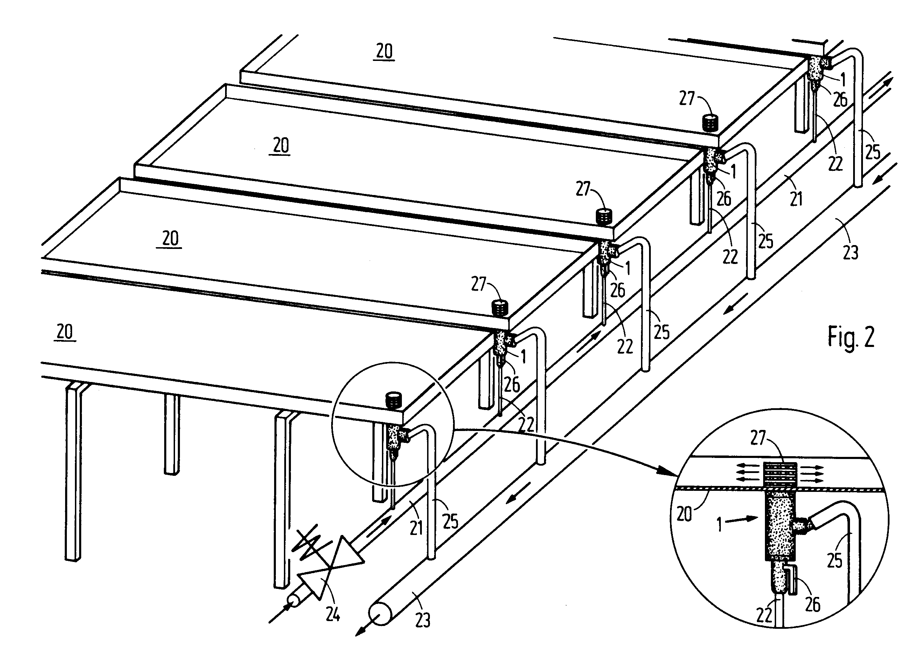

The valve is arranged for leading aerated water to the cultivation tables and for draining the water from the tables, which is explained in further detail in connection with fig. 2 of the drawing, where a valve is mounted under a number of cultivation tables 20.

In fig. 2 the reference numeral 20 refers to each cultivation table in a group of cultivation tables, where a valve 1 is placed under each table. Via a closing valve 26, which will be explained later on, and a water pipe 22, for example a 10 mm PE hose, the valve 1 is connected to a pressure pipe 21, for example a 40 mm plastic pipe or PE pipe. An outlet filter 27 mounted on the outlet 3 of the valve 1 ensures that the water flows horizontally out onto the cultivation table. An outlet hose 25, for example a 3/4" plastic or rubber hose, is coupled to the outlet branch 8 of the lateral 4 of the valve 1. The outlet hose 25 leads to a shared outfall or outlet pipe 23, for example a 110 mm plastic pipe. The arrows in fig. 2 show the direction of flow of the liquid. The pressure pipe 21 and the outlet pipe 23 usually form part of a closed system together with a vessel (not shown) for irrigation liquid.

The cultivation tables 20 are arranged in groups of for example 10-20 tables which are supplied through a shared pressure pipe 21. In the pressure pipe 21 before the first table in the group is placed a magnet valve 24 which can turn the irrigation liquid on and off.

The functioning of the irrigation valve 1 will be explained in the following.

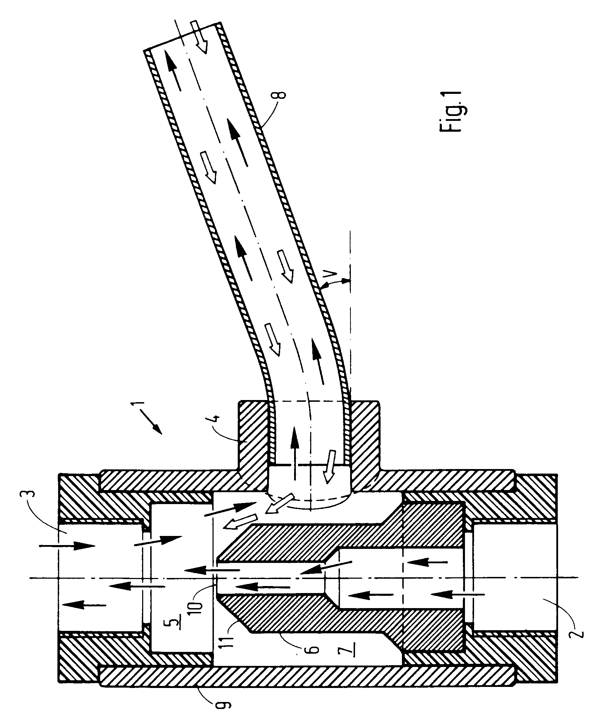

The valve will first be explained with reference to fig. 1. When pressure-water or irrigation liquid is introduced through the inlet 2, the velocity of flow is increased because of the nozzle 6, after which the water flushes up into the mixing chamber 5 and out through the outlet 3 and out onto the cultivation table. Since the valve is open directly through the lateral branch 4, the flow of the water will create a suction effect which will suck air through the outlet branch 8 into the mixing chamber 5. The valve thus aerates the water in a thorough manner, so that the liquid flowing out of the outlet 3 is aerated. When the pressure-water to the inlet 2 is turned off, the flow through the nozzle stops. The water on the cultivation table will automatically be drained away through the lateral 4.

The black arrows in fig. 1 of the drawing show the direction of flow of the water, and the white arrows show the direction of flow of the air.

Since the outlet branch 8 is directed upwards in an inclined manner, it functions as a siphon together with the attached outlet hose 25, so that the draining is carried out as fast as possible.

In fig. 2 it is seen how the valves 1 are arranged under each their pertaining cultivation table. The draining of the cultivation tables will be completed through the outlet hoses 25 and the outlet pipe or outfall 23, the inside diameter of which is substantially larger than that of the pressure-water piping 21, whereby it is ensured that the amount of air in the system to be used for aerating the irrigation liquid is always sufficient, and that there is sufficient space for the water to be drained freely.

With the magnet valve 24 the possibility is thus provided of controlling the irrigation of a number of plant tables completely without other movable parts in the valve 1, and in such a manner that at the same time the water is aerated immediately before it is supplied to each cultivation table.

The valve 26 under each table is for example a simple closing valve, with which a table can be closed off from the irrigation plant if the table is not to be used. Naturally, the valve 26 can be a magnet valve or another valve which can be operated from a distance.

The valve 1 will usually be cast in plastic, possibly several parts put or screwed together.

## Claims

1. Irrigation plant comprising a number of cultivation tables (20) for potted plants or the like and a pipe system for supplying and draining irrigation liquid and for aerating the liquid, each cultivation table (20) comprising an irrigation valve (1), having a valve housing (9), which comprises an inlet (2), an outlet (3), an intermediate mixing chamber (5) placed between them, a narrowing or a nozzle (6) being disposed in the mixing chamber (5), and a further opening (4/8) being connected to the mixing chamber (5) or to an area (7) being in connection with the mixing chamber (5), **characterized** in that the valve (1) is arranged substantially vertically and immediately under each cultivation table (20), that the pipe system comprises a pressure water piping (21), to which there are connected supply pipes (22), each of which is again connected to the inlet (2) of a respective irrigation valve (1), and further comprises an outlet pipe (23), which is connected to the further opening (4/8) of each irrigation valve (1), and that in the pressure water piping (21) there is placed at least one valve, preferably a magnetic valve (24).

2. Irrigation plant according to claim 1, **characterized** in that a filter is placed directly on the irrigation valve, whereby the filter has outlets which direct the flow of the liquid solution orthogonally to the flow in the valve.

3. Irrigation plant according to claim 1 or 2, **characterized** in that the further opening (4) comprises an outlet branch (8) being directed upwards in an inclined manner.

4. Irrigation valve according to any of claims 1 - 3, **characterized** in that the nozzle has an orifice (10) with edges bevelled in an inclined manner (11), that the area (7) is an annular chamber surrounding the nozzle (6) and placed under the nozzle orifice (10).

5. Irrigation valve according to claim 4, **characterized** in that the further opening (4) extends from the annular chamber (7).

6. Irrigation plant according to any preceding claim, **characterized** in that the valve housing (9) is substantially cylindrical and arranged to be placed substantially vertically under a cultivation table, and that the outlet branch (8) forms a rising angle (V) with a horizontal plane of at least 10°.

7. Irrigation plant according to any preceding claim, **characterized** in that the valve in the pressure water pipeing (21) is a magnet valve (24).

8. Irrigation plant according to any preceding claim, **characterized** in that the inside diameter of the outlet pipe (23) is substantially larger than that of the pressure-water piping (21).

9. Irrigation plant according to any preceding claim, **characterized** in that in each inlet pipe (22) there is placed a closing valve (26) before the irrigation valve (1).

## Patentansprüche

1. Bewässerungsanlage mit mehreren Gewächstischen (20) für Topfpflanzen oder dergleichen und einem Rohrsystem zum Zuführen und Ableiten von Bewässerungsflüssigkeit sowie zum Begasen der Flüssigkeit, wobei jeder Gewächstisch (20) ein Bewässerungsventil (1) mit einem Ventilgehäuse (9) aufweist, das einen Einlaß (2), einen Auslaß (3), eine dazwischen befindliche Mischkammer (5), eine in der Mischkammer angeordnete Verengung oder Düse (6) sowie eine an die Mischkammer (5) oder einen mit dieser in Verbindung stehenden Bereich (7) angeschlossene weitere Öffnung (4/8) umfaßt, dadurch **gekennzeichnet,** daß das Ventil (1) im wesentlichen vertikal und unmittelbar unter jedem Gewächstisch (20) angeordnet ist, daß das Rohrsystem eine Druckwasserleitung (21), an die Zuführrohre (22) angeschlossen sind, deren jedes seinerseits mit dem Einlaß (2) jeweils eines Bewässerungsventils (1) verbunden ist, sowie ein an die weitere Öffnung (4/8) angeschlossenes Auslaßrohr (23) umfaßt, und daß in der Druckwasserleitung (21) mindestens ein Ventil, vorzugsweise ein Magnetventil, (24) angeordnet ist.

2. Bewässerungsanlage nach Anspruch 1, dadurch gekennzeichnet, daß direkt auf dem Bewässerungsventil ein Filter mit Auslässen angeordnet ist, die die Strömung der flüssigen Lösung rechtwinklig zur Strömung in dem Ventil richten.

3. Bewässerungsanlage nach Anspruch 1 oder 2, dadurch gekennzeichnet, daß die weitere Öffnung (4) einen schräg nach oben gerichteten Zweigauslaß (8) aufweist.

4. Bewässerungsanlage nach einem der Ansprüche 1 bis 3, dadurch gekennzeichnet, daß die Düse eine Öffnung (10) mit abgeschrägten Kanten (11) aufweist und der Bereich (7) eine die Düse (6) umgebende und unter der Düsenöffnung (10) angeordnete Ringkammer ist.

5. Bewässerungsanlage nach Anspruch 4, dadurch gekennzeichnet, daß die weitere Öffnung (4) von der Ringkammer (7) ausgeht.

6. Bewässerungsanlage nach einem der vorhergehenden Ansprüche, dadurch gekennzeichnet, daß das Ventilgehäuse (9) im wesentlichen zylindrisch ist und im wesentlichen vertikal unter einem Gewächstisch angeordnet ist, und daß der Zweigauslaß (8) mit der Horizontalen einen ansteigenden Winkel (V) von mindestens 10° bildet.

7. Bewässerungsanlage nach einem der vorhergehenden Ansprüche, dadurch gekennzeichnet, daß das Ventil in der Druckwasserleitung (21) ein Magnetventil (24) ist.

8. Bewässerungsanlage nach einem der vorhergehenden Ansprüche, dadurch gekennzeichnet, daß der Innendurchmesser des Auslaßrohrs (23) wesentlich größer ist als der der Druckwasserleitung (21).

9. Bewässerungsanlage nach einem der vorhergehenden Ansprüche, dadurch gekennzeichnet, daß in jedem Einlaßrohr (22) ein Absperrventil (26) vor dem Bewässerungsventil (1) angeordnet ist.

## Revendications

1. Installation d'irrigation comprenant un certain nombre de tables de culture (20) pour des plantes en pots ou analogue, et un système de tuyaux pour fournir et évacuer un liquide d'irrigation et pour aérer le liquide, chaque table de culture (20) comprenant une vanne d'irrigation (1), ayant un boîtier de vanne (9) qui comprend une arrivée (2), une sortie (3), une chambre de mélange intermédiaire (5) placées entre elles, un rétrécissement ou un ajutage (6) étant disposé dans la chambre de mélange (5), et une autre ouverture (4/8) étant raccordée à la chambre de mélange (5) ou à une zone (7) en communication avec la chambre de mélange (5),
caractérisée en ce que la vanne (1) est disposée pratiquement verticalement et immédiatement sous chaque table de culture (20), en ce que le système de tuyaux comprend une tuyauterie d'eau sous pression (21) à laquelle sont raccordés les tuyaux d'alimentation (22), dont chacun est à nouveau raccordé à l'arrivée (2) d'une vanne d'irrigation respective (1), et comprend en outre un tuyau de sortie (23), qui est raccordé à l'autre ouverture (4/8) de chaque vanne d'irrigation (1) et en ce que, dans la tuyauterie d'eau sous pression (21), est placée au moins une vanne, de préférence une vanne magnétique (24).

2. Installation d'irrigation selon la revendication 1, caractérisée en ce qu'un filtre est placé directement sur la vanne d'irrigation, d'où il résulte que le filtre a des sorties qui dirigent le courant de la solution liquide perpendiculairement au courant dans la vanne.

3. Installation d'irrigation selon l'une des revendications 1 et 2, caractérisée en ce que l'autre ouverture (4) comprend une dérivation de sortie (8) dirigée vers le haut en oblique.

4. Vanne d'irrigation selon l'une des revendications 1 à 3, caractérisée en ce que l'ajutage a un orifice (10) avec des bords biseautés en oblique (11), et en ce que la zone (7) est une chambre annulaire entourant l'ajutage (6) et placée sous l'orifice d'ajutage (10).

5. Vanne d'irrigation selon la revendication 4, caractérisée en ce que l'autre ouverture (4) s'étend à partir à partir de la chambre annulaire (7).

6. Installation d'irrigation selon l'une des revendications précédentes, caractérisée en ce que le boîtier de vanne (9) est pratiquement cylindrique et est agencé pour être placé pratiquement verticalement sous une table de culture, et en ce que la dérivation de sortie (8) fait un angle montant (V) d'au moins 10° avec un plan horizontal.

7. Installation d'irrigation selon l'une des revendications précédentes, caractérisée en ce que la vanne située dans la tuyauterie d'eau sous pression (21) est une vanne magnétique (24).

8. Installation d'irrigation selon l'une des revendications précédentes, caractérisée en ce que le diamètre intérieur du tuyau de sortie (23) est notablement plus grand que celui de la tuyauterie d'eau sous pression (21).

9. Installation d'irrigation selon l'une des revendications précédentes, caractérisée en ce que, dans chaque tuyau d'arrivée (22), est placée une vanne de fermeture (26) avant la vanne d'irrigation (1).
